# EUROPEAN PATENT APPLICATION

(11) **EP 2 814 092 A1**
(43) Date of publication of application: **17.12.2014**
(21) Application number: 13003235.2
(22) Date of filing: 25.06.2013
(51) Int. Cl.: H01M 4/131, H01M 4/134, H01M 4/133, H01M 4/36, H01M 4/1391, H01M 4/1393, H01M 4/1395, H01M 4/38, H01M 4/485, H01M 4/587, H01M 10/0525

(54) **Secondary battery and electrode for secondary battery**

(30) Priority: 14.06.2013 CN 201310236224
(71) Applicant: Greenful New Energy Co., Ltd., Shanghai (CN)
(72) Inventor: Mengqun, Si, 88-20 Shanghai (CN); Ying, Zhou, 18-501 Shanghai (CN)
(74) Representative: Müller-Boré & Partner Patentanwälte PartG mbB

(57) **Abstract**

A secondary battery includes a positive electrode and a negative electrode. The negative electrode includes first particles (21) made of metal and second particles (22) made of a silicon containing substance. The first particles (21) are in contact with the second particles (22).

## Description

### BACKGROUND

The present invention relates to secondary batteries and electrodes for such a secondary battery.

Batteries convert chemical energy of chemical substances provided in their interior to electric energy by an electrochemical oxidation-reduction reaction. Recently, the batteries are used worldwide mainly for portable electronic equipment in the fields of electronics, communications, computers, etc. Further, there is a future demand for practical use of batteries as large-scale devices for mobile entities (e.g., electric automobile, etc.) and stationary systems (e.g., a load-leveling system, etc.). Accordingly, the batteries are becoming more and more important key devices.

Among the batteries, a lithium ion secondary battery is widely used at the present day. A general lithium ion secondary battery includes a positive electrode using a lithium transition metal composite oxide as an active material, a negative electrode using a material capable of occluding and extracting lithium ions (e.g., lithium metal, lithium alloy, metal oxide, or carbon) as an active material, nonaqueous electrolyte, and a separator (see, for example, Japanese Patent Application Laid-Open Publication No. H05-242911).

### SUMMARY OF INVENTION

However, the conventional lithium ion secondary battery is limited in output and capacity per unit weight. Accordingly, a novel secondary battery is demanded.

The present invention has been made in view of the foregoing and has its object of providing a novel secondary battery which can attain high output or high capacity and an electrode for such a secondary battery.

A secondary battery according to the present invention includes a positive electrode and a negative electrode. The negative electrode includes first particles made of metal and second particles made of a silicon containing substance. The first particles are in contact with the second particles.

In one embodiment, the metal forming the first particles is ionized to move to the positive electrode in charge or discharge.

In one embodiment, the metal forming the first particles functions as a donor. In one embodiment, the first particles are made of lithium.

In one embodiment, the second particles are made of silicon oxide.

In one embodiment, the negative electrode further includes a layered material, and the first particles and the second particles are located among layers of the layered material.

In one embodiment, the layered material is made of graphene.

In one embodiment, the layered material has an interlayer distance of 10 nm to 500 nm.

In one embodiment, the positive electrode includes: core particles with a diameter of 1 µm or larger; and particles with a diameter of smaller than 1 µm formed on surfaces of the core particles.

In one embodiment, the secondary battery includes: an ion transmission member configured to transmit ions between the negative electrode and the positive electrode; and a hole transmission member configured to transmit holes (positive holes) between the negative electrode and the positive electrode.

In one embodiment, the ion transmission member is maintained in a state of any of liquid, gel, and solid.

In one embodiment, the hole transmission member is composed of nonwoven cloth carrying a ceramic material.

An electrode for a secondary battery according to the present invention includes: first particles made of metal; and second particles made of a silicon containing substance. The first particles are in contact with the second particles.

### [Advantages of the Invention]

According to the present invention, a secondary battery and an electrode for such a secondary battery can be provided which can attain high output and high capacity.

### BRIEF DESCRIPTION OF THE DRAWINGS

FIG. 1 is a schematic illustration of a secondary battery according to one embodiment of the present invention.
FIG. 2 is a graph representation showing specific energy of a hybrid battery and a lithium ion battery.
FIG. 3A is a graph representation showing charge characteristics of a lithium battery employing a positive electrode in which nano particles are formed on the surfaces of core particles.
FIG. 3B is a graph representation showing discharge characteristics of the lithium battery employing the positive electrode in which the nano particles are formed on the surfaces of the core particles.
FIG. 4A is a first SEM photograph showing a structure of a positive electrode in Example 1.
FIG. 4B is a second SEM photograph showing a structure of the positive electrode in Example 1.
FIG. 4C is a third SEM photograph showing a structure of the positive electrode in Example 1.
FIG. 5A is a first illustration schematically showing a structure in cross section of a negative electrode in Example 1, which was observed by EEELS and TEM.
FIG. 5B is a second illustration schematically showing a structure in cross section of the negative electrode in Example 1, which was observed by EEELS and TEM.
FIG. 6 is a table indicting results of an initial capacity evaluation, a nail penetration test, an overcharge test, and an evaluation of life characteristics at normal temperature in Example 1 and Comparative Examples 1 and 2.

### DETAILED DESCRIPTION OF THE INVENTION

Conventional lithium ion secondary batteries are limited in output and capacity per unit weight. Accordingly, a novel secondary battery is demanded. According to a secondary battery and an electrode for such a secondary battery, high output and high capacity can be attained.

Embodiments of the present invention will be described below with reference to the accompanying drawings.

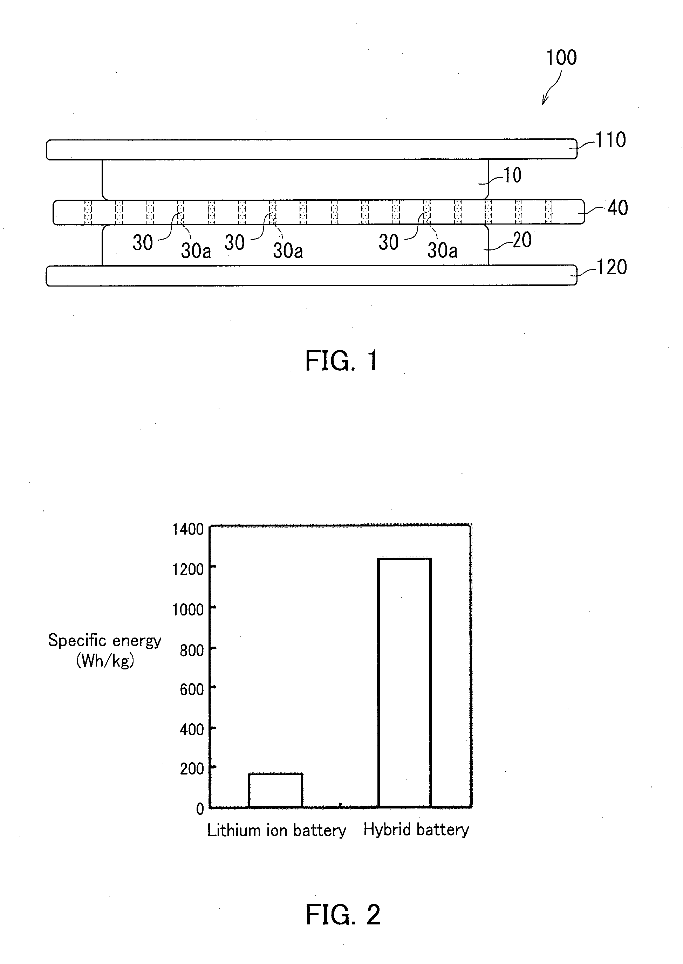

FIG. 1 is a schematic illustration of a battery 100 according to the present embodiment.

The battery 100 in the present embodiment is a secondary battery. The battery 100 can convert electric energy obtained from an external power source to chemical energy, store the chemical energy, and take out the stored energy again as electromotive force according to need.

As shown in FIG. 1, the battery 100 includes electrodes 10 and 20, an ion transmission member 30, a hole transmission member 40, and current collectors 110 and 120.

The electrode 10 serves as a positive electrode, while the electrode 20 serves as a negative electrode in the present embodiment. The ion transmission member 30 transmits ions between the electrode 10 and the electrode 20. The hole transmission member 40 transmits holes (positive holes) between the electrode 10 and the electrode 20.

Vias 30a are formed in the hole transmission member 40 to extend in a direction orthogonal to the obverse and reverse surfaces of the hole transmission member 40. In the present embodiment, the hole transmission member 40 is immersed in electrolyte to fill the vias 30a with the electrolyte. The ion transmission member 30 is formed of the electrolyte in the vias 30a, for example. However, the ion transmission member 30 is not limited to this and may be solid or gel.

The electrode 10 faces the electrode 20 with the ion transmission member 30 and the hole transmission member 40 interposed. Each of the ion transmission member 30 and the hole transmission member 40 is in contact with both the electrode 10 and the electrode 20. The electrode 10 is physically out of contact with the electrode 20. Further, the electrode 10 is in contact with the current collector 110, while the electrode 20 is in contact with the current collector 120.

When the electrode 10 is electrically connected to a high potential terminal of an external power source (not shown), and the electrode 20 is electrically connected to a low potential terminal of the external power source (not shown), the battery 100 is charged. In so doing, ions generated in the electrode 10 move to the electrode 20 through the ion transmission member 30 to be occluded in the electrode 20. Thus, the potential of the electrode 10 becomes higher than that of the electrode 20.

During discharge, electricity (electrical charge) flows from the electrode 10 to the electrode 20 through an external load (not shown). In so doing, ions (e.g., cations) generated in the electrode 20 move to the electrode 10 through the ion transmission member 3 0.

Hereinafter, the ions transmitted through the ion transmission member 30 are referred to as transmitted ions.

The transmitted ions may be lithium ions (Li⁺), for example. The transmitted ions are preferably at least one of alkali metal ions and alkali earth metal ions. The electrode 10 preferably contains a compound containing alkali metal or alkali earth metal. The electrode 20 is preferably capable of occluding and extracting the alkali metal ions or the alkali earth metal ions.

The electrode 10 is made of a p-type semiconductor, for example. Holes function as a carrier (charge carrier) in a p-type semiconductor. The holes move through the electrode 10 in both charge and discharge.

The holes in the electrode 10 move to the electrode 20 through the hole transmission member 40 in charge. While on the other hand, the electrode 10 receives the holes from an external power source (not shown).

The holes in the electrode 10 move to the electrode 20 through an external load (not shown) in discharge. While on the other hand, the electrode 10 receives the holes through the hole transmission member 40.

Not only the ions but also the holes move in charge and discharge in the battery 100 of the present embodiment. Specifically, in discharge, the ions generated in the electrode 20 move to the electrode 10 through the ion transmission member 30. As well, due to the potential difference between the electrode 10 and the electrode 20, the holes are caused to circulate among the electrode 10, an external load (not shown), the electrode 20, and the hole transmission member 40 in this order. Further, in charge, the ions generated in the electrode 10 move to the electrode 20 through the ion transmission member 30. As well, the holes are caused to circulate among the electrode 10, the hole transmission member 40, the electrode 20, and the external power source (not shown) in this order.

As described above, in the battery 100 according to the present embodiment, the ions generated in the electrode 10 or the electrode 20 move between the electrode 10 and the electrode 20 through the ion transmission member 30. Movement of the ions between the electrode 10 and the electrode 20 can attain high capacity of the battery 100. Further, in the battery 100 of the present embodiment, the holes move between the electrode 10 and the electrode 20 through the hole transmission member 40. The holes are smaller than the ions and have high mobility. Accordingly, the battery 100 can attain high output.

As described above, the battery 100 according to the present embodiment can attain high capacity and high output. The battery 100 in the present embodiment performs ion transmission through the ion transmission member 30 and hole transmission through the hole transmission member 40. The battery 100 in the present embodiment is a hybrid battery that can exhibit both characteristics of a chemical battery (e.g., lithium battery) and a physical battery (e.g., semiconductor battery).

FIG. 2 is a graph representation showing specific energy of the battery 100 (hybrid battery) according to the present embodiment and a general lithium ion battery. As understood from FIG. 2, the battery 100 (hybrid battery) according to the present embodiment can significantly improve output characteristics.

The amount of electrolyte as the ion transmission member 30 can be reduced in the battery 100 according to the present embodiment. Accordingly, even if the electrode 10 would come into contact with the electrode 20 to cause an internal short-circuit, an increase in temperature of the battery 100 can be suppressed. Further, the battery 100 of the present embodiment can decrease less in capacity at quick discharge and is excellent in cycle characteristic.

Where a n-type semiconductor is used as the electrode 20 in addition to the use of the p-type semiconductor as the electrode 10, the capacity and the output characteristics of the battery 100 can be further improved. Whether the electrode 10 and the electrode 20 are a p-type semiconductor or a n-type semiconductor can be determined by measuring the Hall effect. When a magnetic field is applied, while electric current is allowed to flow, voltage is generated by Hall effect in the direction orthogonal to both the direction in which the electric current flows and the direction in which the magnetic field is applied. According to the direction of the voltage, whether each electrode is a p-type semiconductor or a n-type semiconductor can be determined.

### [Electrode 10]

The electrode 10 includes core particles with a diameter of 1 µm or larger and particles with a diameter of smaller than 1 µm formed on the surfaces of the core particles. The electrode 10 includes many core particles. The particles with a diameter of smaller than 1 µm are formed on the surface of each core particle. With this structure, the electrode 10 can readily generate the holes. Further, this can increase the surface area to easily increase the capacity of the battery 100. Hereinafter, the particles with a diameter of smaller than 1 µm are referred to as nano particles. The characteristics of the nano particles might influence the electric characteristics of the electrode 10 more greatly than those of the core particles.

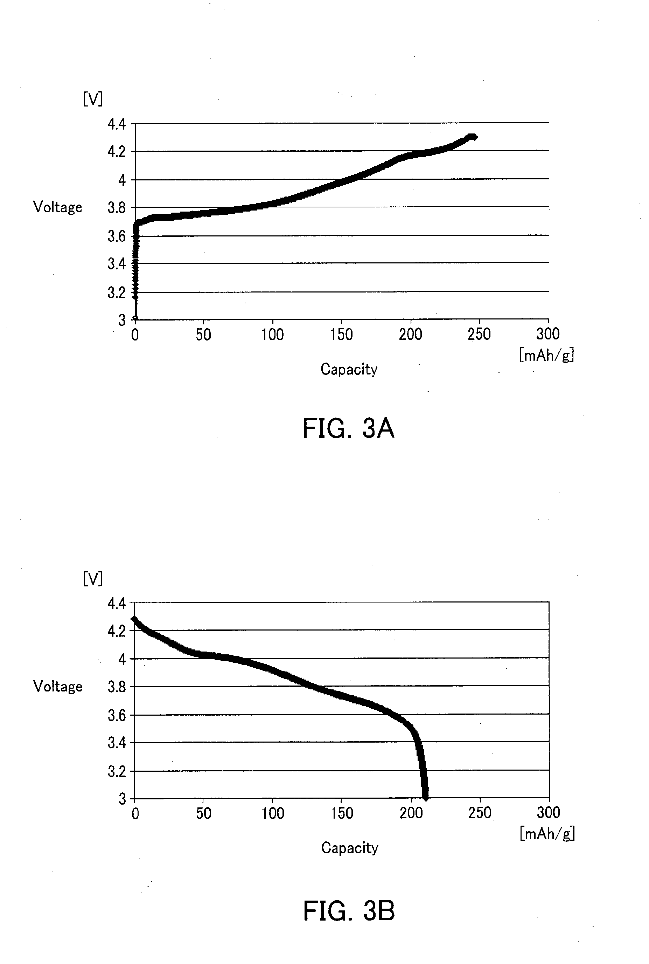

FIG. 3A is a graph representation showing charge characteristics of a lithium battery employing a positive electrode in which the nano particles are formed on the surfaces of the core particles. FIG. 3B is a graph representation showing discharge characteristics of the lithium battery employing the positive electrode in which the nano particles are formed on the surfaces of the core particles.

The capacity limit of a lithium battery employing a positive electrode formed of only the core particles was about 150 mAh/g. By contrast, the lithium battery employing the positive electrode in which the nano particles are formed on the surfaces of the core particles could attain a capacity of over 200 mAh/g, as shown in FIGS. 3A and 3B.

The electrode 10 contains a composite oxide containing alkali metal or alkali earth metal. For example, the alkali metal may be at least one type of lithium and sodium. The alkali earth metal may be magnesium. The composite oxide functions as a positive electrode active material of the battery 100. For example, the electrode 10 is made of a positive electrode material obtained by mixing a composite oxide and a positive electrode binding agent. A conductive material may be further mixed with the positive electrode material. It is noted that the composite oxide is not limited to one type and may be a plurality of types.

The composite oxide contains a p-type composite oxide as a p-type semiconductor. For example, in order to function as a p-type semiconductor, the p-type composite oxide contains lithium and nickel, in which at least one type selected from the group consisting of antimony, lead, phosphorus, born, aluminum, and gallium is doped. This composite oxide is expressed as LiₓNi_{y}M_{z}O_{α}. Wherein 0< x <3, y+z=1, and 1<α<4. Further, M is an element to allow the electrode 10 to function as a p-type semiconductor and is at least one type selected from the group consisting of antimony, lead, phosphorus, born, aluminum, and gallium, for example. Doping causes structural deficiency in the p-type composite oxide to form the holes.

For example, the p-type composite oxide preferably contains lithium nickelate in which a metal element is doped. As one example, the p-type composite oxide may be lithium nickelate in which antimony is doped.

It is noted that the composite oxide is preferably obtained by mixing plural types of composite oxides. For example, the composite oxide preferably contains a composite oxide capable of being in a solid solution state with a p-type composite oxide. The solid solution is formed of a p-type composite oxide and a composite oxide capable of being in a solid solution state. For example, the composite oxide capable of being in a solid solution state tends to form a layered solid solution with nickelate. The solid solution has a structure which allows holes to easily move. For example, the composite oxide capable of being in a solid solution state is lithium manganese oxide (Li₂MnO₃). In this case, lithium has a valence of 2.

Further, the composite oxide preferably contains a composite oxide having an olivine structure. The olivine structure can reduce deformation of the electrode 10 even when the p-type composite oxide forms the holes. Further, for example, it is preferable that the composite oxide having an olivine structure contains lithium and manganese, and lithium has a valence larger than 1. In this case, lithium ions can easily move, and the holes can be easily formed. For example, the composite oxide having an olivine structure is LiMnPO₄.

Moreover, the composite oxide may contain a p-type composite oxide, a composite oxide capable of being in a solid solution state, and a composite oxide having an olivine structure. Mixing of plural types of composite oxides in this manner can improve the cycle characteristic of the battery 100.

For example, the composite oxide may contain LiₓNi_{y}M_{z}O_{α}, Li₂MnO₃, and Li_{β}MnPO₄. Wherein 0<x<3, y+z=1, 1<α<4, and β>1.0. Alternatively, the composite oxide may contain LiₓNi_{y}M_{z}O_{α}, Li₂MnO₃, and Li_{γ}MnSiO₄. Wherein 0<x<3, y+z=1, 1<α<4, and γ>1.0. Or, the composite oxide may contain Li₁₊ₓ(Fe_{0.2}Ni_{0.2})Mn_{0.6}O₃, Li₂MnO₃, and Li_{β}MnPO₄. Wherein 0<x<3 and β>1.0.

When the electrode 10 contains three types of oxides, LiₓNi_{y}M_{z}O_{α}, Li₂MnO₃, and Li_{β}MnPO₄, the electrode 10 can readily have a structure in which the nano particles are formed on the surfaces of the core particles. Further, when the mixture of the three types of oxides are subjected to mechanofusion, physical collision crushes particles with a diameter of 1 µm or larger to easily form nano particles. Thus, the electrode 10 can be easily formed in which the nano particles are formed on the surfaces of the core particles. However, rather than the mechanofusion, coprecipitation can form the electrode 10 in which the nano particles are formed on the surfaces of the core particles.

The electrode 10 may contain LiNi(Sb)O₂, Li₂MnO₃, and LiMnPO₄, for example. In this case, the core particles of the electrode 10 might be made of any one of LiNi(Sb)O₂, Li₂MnO₃, and LiMnPO₄. Further, the nano particles of the electrode 10 might be made of mainly a eutectic substance of LiNi(Sb)O₂ and Li₂MnO₃.

Examples of the active material of the electrode 10 may include composite oxides, such as lithium nickelate, lithium manganese phosphate, lithium manganate, lithium nickel manganate, respective solid solutions of them, and respective degenerates of them (eutectic of metal, such as antimony, aluminum, magnesium, etc.), and substances obtained by chemically or physically synthesizing various materials. Specifically, it is preferable to use, as the composite oxide, a substance obtained in physical synthesis by allowing antimony doped nickelate, lithium manganese phosphate, and lithium manganese oxide to mechanically collide with one another, or a substance obtained in synthesis by chemically coprecipitating the three composite oxides.

It is noted that the composite oxide may contain fluorine. For example, LiMnPO₄F may be used as the composite oxide. This can reduce variation in characteristics of the composite oxide even if hydrofluoric acid is generated due to the presence of lithium hexafluorophosphate in the electrolyte.

The electrode 10 is made of a positive electrode material obtained by mixing a composite oxide, a positive electrode binding agent, and a conductive material. For example, the positive electrode binding agent may contain acrylic resin, so that an acrylic resin layer is formed in the electrode 10. For example, the positive electrode binding agent may contain rubber macromolecules having a polyacrylate unit.

It is noted that it is preferable that macromolecules with comparatively high molecular weight and macromolecules with comparatively low molecular weight are mixed as the rubber macromolecules. When the macromolecules with different molecular weights are mixed, durability against hydrofluoric acid can be exhibited, and hindrance to hole movement can be reduced.

For example, the positive electrode binding agent is manufactured by mixing a degenerated acrylonitrile rubber particle binder (BM-520B by ZEON Corporation, or the like) with carboxymethylcellulose (CMC) having a thickening effect and soluble degenerated acrylonitrile rubber (BM-720H by ZEON Corporation, or the like). It is preferable to use, as the positive electrode binding agent, a binding agent (SX9172 by ZEON Corporation) made of a polyacrylic acid monomer with an acrylic group. Further, acetylene black, ketjen black, and various types of graphite may be used solely or in combination as a conducting agent.

It is noted that, as will be described later, when a nail penetration test or a crash test is performed on a secondary battery, temperature increased at an internal short-circuit may locally exceed several hundred degrees centigrade according to the test conditions. For this reason, the positive electrode binding agent is preferably made of a material that hardly causes burn down and melting. For example, at least one type of material, of which crystalline melting point and kickoff temperature are 250°C or higher, is preferably used as the binding agent.

As one example, preferably, the binding agent is amorphous, has high thermal resistance (320°C), and contains rubber macromolecules having rubber elasticity. For example, the rubber macromolecules have an acrylic group having a polyacrylonitrile unit. In this case, the acrylic resin layer includes rubber macromolecules containing polyacrylic acid as a base unit. The use of such a positive electrode binding agent can reduce exposure of the current collectors which may be caused by slipping down of the electrode accompanied by deformation by softening and burn down of the resin. As a result, abrupt flow of excessive electric current can be reduced, thereby causing no abnormal overheating. Further, a binding agent with a nitrile group exemplified by polyacrylonitrile hinders hole movement a little and is accordingly used suitably in the battery 100 of the present embodiment.

The use of the aforementioned materials as the positive electrode binding agent may hardly form a crack in the electrode 10 in assembling the battery 100. This can maintain a high yield. In addition, the use of a material with an acrylic group as the positive electrode binding agent can reduce internal resistance to reduce damage of the property of the p-type semiconductor of the electrode 10.

It is noted that it is preferable that the positive electrode binding agent with an acrylic group contains ionic conductive glass or a phosphorus element. This can prevent the positive electrode binding agent from serving as a resistor to inhibit electron trapping. Thus, heat generation in the electrode 10 can be reduced. Specifically, the presence of the phosphorus element or ionic conductive glass in the positive electrode binding agent with an acrylic group can accelerate a dissociation reaction and diffusion of lithium. With these materials contained, the acrylic resin layer can cover the active material. Accordingly, gas generation, which may be caused by a reaction of the active material and the electrolyte, can be reduced.

Furthermore, the presence of the phosphorus element or ionic conductive glass in the acrylic resin layer can result in potential relaxation to reduce the oxidation potential that reaches the active material, while lithium can move with less interference. Further, the acrylic resin layer may be excellent in withstanding voltage. Accordingly, an ionic conductive mechanism, which can attain high capacity and high output at high voltage, can be formed in the electrode 10. Still more, the diffusion rate becomes high, while the resistance becomes low. This can suppress temperature rise at high output, thereby increasing the lifetime and safety.

### [Electrode 20]

The electrode 20 is capable of occluding and extracting the transmitted ions.

As an active material for the electrode 20, graphene, silicon based composite material (silicide), silicon oxide based material, titanium alloy based material, and various types of alloy composition materials can be used solely or in combination. It is noted that graphene is a sheet of carbon atoms with ten or less layers with a nano level interlayer distance (1 µm or smaller).

The electrode 20 includes first particles made of metal and second particles made of a silicon containing substance (material containing silicon). The first particles are in contact with the second particles in the electrode 20. Contact between the first particles (metal) and the second particles (silicon containing substance) can make the first particles to function as a donor for silicon of the second particles. Accordingly, the second particles can exhibit both a function to occlude lithium ions and a function of a n-type semiconductor. This can make the negative electrode to easily catch the transmitted ions and the holes, thereby easily achieving both hole transmission and ion transmission. As a result, the capacity of the battery 100 can be increased.

The first particles are made of lithium (Li), for example. The first particles (e.g., lithium) in contact with the second particles (silicon containing substance) serve as metal (e.g., lithium metal). However, the metal (e.g., lithium) forming the first particles is ionized in charge or discharge to move to the electrode 10 (positive electrode). Further, the first particles may function as a donor. The second particles are made of silicon or silicon oxide, for example.

The electrode 20 includes a layered material. The layered material is made of graphene, for example. The layered material has an interlayer distance of 10 nm to 500 nm, for example. The first and second particles may be located among layers of the layered material or peep from the layers of the layered material. Silicon of the second particles is bonded to metal more readily than carbon of graphene. Accordingly, occlusion of the first particles (metal) by the second particles (silicon containing substance) can reduce the amount of the electrode 20 (material consumption).

In particular, the electrode 20 preferably contains a mixture of graphene and silicon oxide. In this case, ion (cation) occlusion efficiency of the electrode 20 can be increased. Further, each of graphene and silicon oxide is hard to function as a heating element. Thus, the safety of the battery 100 can be increased.

As described above, it is preferable that the electrode 20 serves as a n-type semiconductor. The electrode 20 contains graphene and a silicon containing material. The silicon containing material may be SiO_{Xa} (Xa<2), for example. Further, the use of graphene and/or silicon in the electrode 20 can result in that heat is hardly generated even when an internal short-circuit occurs in the secondary battery 100. Thus, breakdown of the battery 100 can be reduced.

Moreover, a donor may be doped in the electrode 20. For example, a metal element as a donor may be doped in the electrode 20. The metal element may be alkali metal or transition metal, for example. Any of lithium, sodium, and potassium may be doped as the alkali metal, for example. Alternatively, copper, titanium or zinc may be doped as a transition metal.

The electrode 20 may contain graphene in which lithium is doped. For example, lithium may be doped by allowing a material of the electrode 20 to contain organic lithium and heating it. Alternatively, lithium metal may be attached to the electrode 20 for lithium doping. Preferably, the electrode 20 contains graphene, in which lithium is doped, and silicon.

The electrode 20 contains halogen. Even when hydrofluoric acid is generated from lithium hexafluorophosphate as the electrolyte, halogen in the electrode 20 can reduce variation in characteristics of the electrode 20. Halogen includes fluorine, for example. For example, the electrode 20 may contain SiO_{Xa}F. Alternatively, halogen includes iodine.

The electrode 20 is made of a negative electrode material obtained by mixing a negative electrode active material and a negative electrode binding agent. As the negative electrode binding agent, the material similar to that of the positive electrode binding agent can be used. It is noted that a conductive material may be further mixed with the negative electrode material.

### [Ion transmission member 30]

The ion transmission member 30 is any of liquid, gel, and solid. Suitably, liquid (electrolyte) is used as the ion transmission member 30.

Salt is dissolved in a solvent of the electrolyte. As the salt, one type or a mixture of two or more types selected from the group consisting of LiPF₆, LiBF₄, LiClO₄, LiSbF₆, LiAsF₆, LiCF₃SO₃, LiN(SO₂CF₃)₂, LiN(SO₂C₂F₅)₂, LiC(SO₂CF₃)₃, LiN(SO₃CF₃)₂, LiC₄F₉SO₃, LiAlO₄, LiAlCl₄, LiCl, LiI, lithium bis(pentafluoro-ethane-sulfonyl)imide (LiBETI, LiN(SO₂C₂Fb)₂), and lithium bis(trifluoromethanesulfonyl)imide (LiTFS) may be used.

Further, one type or a mixture of plural types among ethylene carbonate (EC), fluorinated ethylene carbonate (FEC), dimethyl carbonate (DMC), diethyl carbonate (DEC), and methyl ethyl carbonate (MEC) may be used as the solvent.

Moreover, in order to ensure the safety in overcharge, there may be added to the electrolyte vinylene carbonate (VC), cyclohexylbenzene (CHB), propane sultone (PS), propylene sulfite (PRS), ethylene sulfite (ES), etc., and their degenerates.

### [Hole transmission member 40]

The hole transmission member 40 is solid or gel. The hole transmission member 40 is bonded to at least one of the electrode 10 and the electrode 20.

Where electrolyte is used as a material for the ion transmission member 30, the hole transmission member 40 preferably includes a porous layer. In this case, the electrolyte communicates with the electrode 10 and the electrode 20 through the porous layer.

For example, the hole transmission member 40 may contain a ceramic material. As one example, the hole transmission member 40 may include a porous film layer containing inorganic oxide filler. Preferably, the primary component of the inorganic oxide filler may be alumina (α-Al₂O₃), for example. The holes can move on the surface of the alumina. Further, the porous film layer may further contain ZrO₂-P₂O₅. Alternatively, titanium oxide or silica may be used as a material for the hole transmission member 40.

Preferably, the hole transmission member 40 hardly shrinks regardless of temperature variation. Further, the hole transmission member 40 preferably has low resistance. For example, nonwoven fabric carrying a ceramic material may be used as the hole transmission member 40. The nonwoven fabric hardly shrinks regardless of temperature variation. Further, the nonwoven fabric has high withstanding voltage and resistance to oxidation and exhibits low resistance. For this reason, the nonwoven fabric is suitably used as a material for the hole transmission member 40.

The hole transmission member 40 preferably functions as a generally-called separator. The hole transmission member 40 is not limited specifically as far as it is a composition that can be durable within a range of use of the battery 100 and does not lose a semiconductor function in the battery 100. As a material for the hole transmission member 40, nonwoven fabric carrying α-Al₂O₃ may be used preferably. The thickness of the hole transmission member 40 is not limited specifically. However, it is preferable to design the thickness to be 6 µm to 25 µm, which is a film thickness that can obtain designed capacity.

Moreover, ZrO₂-P₂O₅ is preferably mixed with alumina. This can make it easier to transmit the holes.

### [Current collectors 110, 120]

For example, the current collectors 110 and 120 are made of stainless steel. This can increase the potential width at a low cost.

### [Examples]

Examples of the present invention will be described below. However, the present invention is not limited to the following examples.

### (Comparative Example 1)

A coating for a positive electrode was manufactured by stirring BC-618 (lithium nickel manganese cobalt oxide by Sumitomo 3M Limited), PVDF #1320 (N-methylpyrrolidone (NMP) solution by KUREHA CORPORATION, solid content of 12 weight parts), and acetylene black at a weight ratio of 3:1:0.09 together with additional N-methylpyrrolidone (NMP) by a double-arm kneader.

Then, the manufactured coating for a positive electrode was applied to aluminum foil with a thickness of 13.3 µm and was dried. The dried coating (electrode material) was subsequently rolled so that its total thickness was 155 µm and was then cut out into a predetermined size, thereby obtaining an electrode (positive electrode).

On the other hand, artificial graphite, BM-400B (rubber particulate binding agent of styrene-butadiene copolymer by ZEON Corporation; solid content of 40 weight parts), and carboxymethylcellulose (CMC) were stirred at a weight ratio of 100:2.5:1 together with an appropriate amount of water by a double-arm kneader, thereby manufacturing a coating for a negative electrode.

Next, the manufactured coating for a negative electrode was applied to copper foil with a thickness of 10 µm and was dried. Subsequently, the dried coating (electrode material) was rolled so that its total thickness was 180 µm and was then cut out into a predetermined size, thereby obtaining an electrode (negative electrode).

A polypropylene microporous film (separator) with a thickness of 20 µm was interposed between the positive and negative electrodes obtained as above to form a layered structure. Then, the layered structure was cut out into a predetermined size and was inserted in a battery can. Electrolyte was manufactured by dissolving 1 M of LiPF₆ into a mixed solvent obtained by mixing ethylene carbonate (EC), dimethyl carbonate (DMC), and methyl ethyl carbonate (MEC).

Thereafter, the manufactured electrolyte was introduced in a battery can in a dry air environment and was left for a predetermined period. Subsequently, precharge with electric current at a 0.1 C rate was performed for about 20 minutes. Then, the opening was sealed. It was left for a predetermined period in a normal temperature environment for aging, thereby manufacturing a stacked lithium ion secondary battery (Comparative Example 1).

### (Example 1)

A material obtained by doping 0.7 weight % of antimony (Sb) in lithium nickelate (by Sumitomo Metal Mining Co., Ltd.), Li_{1.2}MnPO₄ (Lithiated Metal Phosphate II by The Dow Chemical Company), and Li₂MnO₃ (ZHFL-01 by Shenzhen Zhenhua E-Chem Co., Ltd.) were mixed so that the weight rates were 54.7 weight %, 18.2 weight %, and 18.2 weight %, respectively. Then, the resultant mixture was subjected to three-minute processing (mechanofusion) at a rotational speed of 1500 rpm by AMS-LAB (by Hosokawa Micron Corporation), thereby manufacturing an active material for the electrode 10 (positive electrode).

Next, the manufactured active material for the electrode 10, acetylene black (conductive member), and a binding agent (SX9172 by ZEON Corporation) made of polyacrylic acid monomer with an acrylic group were stirred at a solid content weight ratio of 92:3:5 together with N-methylpyrrolidone (NMP) by a double-arm kneader, thereby manufacturing a coating for the electrode 10 (positive electrode).

Next, the manufactured coating for the electrode 10 was applied to current collector foil of stainless steel (by NIPPON STEEL & SUMIKIN MATERIALS CO. ,LTD.) with a thickness of 13 µm and was dried. Then, the dried coating (electrode material) was rolled so that its surface density was 26.7 mg/cm² and was cut out into a predetermined size, thereby obtaining the electrode 10 (positive electrode) and the current collector 110. The Hall effect of this electrode 10 was measured by a Hall effect measurement method to confirm that the electrode 10 had the characteristics of a p-type semiconductor.

By contrast, silicon oxide (SiO_{Xa}: "SiO_{X}" by Shanghai Shanshan Tech Co., Ltd.) and lithium octylate were mixed at a weight ratio of 99.2:0.8, and the resultant mixture was stirred for one hour in a shaker. Then, the stirred mixture and a graphene material ("xGnP Graphene Nanoplatelets H type" by XG Sciences, Inc.) were mixed at a weight ratio of 37.6:56.4. Subsequently, the resultant mixture was subjected to three-minute processing (mechanofusion) at a rotational speed of 800 rpm by NOB-130 (Nobilta by Hosokawa Micron Corporation), thereby manufacturing a negative electrode active material. Next, the negative active material and a negative electrode binding agent composed of polyacrylic acid monomer having an acryl group (SX9172 by ZEON Corporation) were stirred at a solid content weight ratio of 95:5 together with N-methylpyrrolidone (NMP) by a double-arm kneader, thereby manufacturing a coating for the electrode 20 (negative electrode).

Subsequently, the manufactured coating for the electrode 20 was applied to current collector foil of stainless steel (NIPPON STEEL & SUMIKIN MATERIALS CO.,LTD.) with a thickness of 13 µm and was dried. Then, the dried coating (electrode material) was rolled so that its surface density was 5.2 mg/cm² and was cut out into a predetermine size, thereby forming the electrode 20 (negative electrode) and the current collector 120.

A sheet of nonwoven fabric with a thickness of 20 µm carrying α-alumina ("Nano X" by Mitsubishi Paper Mills Ltd.) was interposed between the electrode 10 (positive electrode) and the electrode 20 (negative electrode) obtained as above. This sheet functions as the hole transmission member 40 with the vias 30a. Thus, a layered structure was formed which is composed of the current collector 110, the electrode 10 (positive electrode), the hole transmission member 40, the electrode 20 (negative electrode), and the current collector 120. Then, the layered structure was cut out into a predetermined size and was inserted in a battery container.

Subsequently, a mixed solvent obtained by mixing ethylene carbonate (EC), dimethyl carbonate (DMC), ethylmethyl carbonate (EMC), and propylene carbonate (PC) at a volume ratio of 1/1/1/1 was prepared. Then, 1 M of LiPF₆ was dissolved into the mixed solvent, thereby manufcturing electrolyte.

Next, the manufactured electrolyte was introduced in a battery container in a dry air environment and was left for a predetermined period. Subsequently, after precharge with electric current at a 0.1 C rate was performed for about 20 minutes, the opening is sealed. Then, it was left for aging for a predetermined period in a normal temperature environment, thereby obtaining a battery 100 (Example 1). In the nonwoven sheet carrying α-alumina, "Novolyte EEL-003" by Novolyte Technologies Inc. was immersed. "Novolyte EEL-003" is a substance obtained by adding 2 weight % of vinylene carbonate (VC) and 1 weight % of lithium bis(oxalate)borate (LiBOB) to electrolyte.

### (Comparative Example 2)

Lithium octylate was not added to the electrode 20 (negative electrode) in Example 1, thereby manufacturing a secondary battery.

Next, the manufactured secondary batteries (Example 1 and Comparative Examples 1 and 2) were evaluated by the following methods.

### (Observation of electrode)

Each secondary battery was decomposed. Each cross section of the electrodes (positive electrode and negative electrode) was observed by electron energy loss spectroscopy (EEELS), a tunneling microscope (TEM), and a scanning electron microscope (SEM).

### (Evaluation of initial capacity of battery)

Capacity performance of the secondary batteries in a potential range between 2 and 4.3 V was compared for evaluation on the assumption that the capacity of the secondary battery in Comparative Example 1 in 1 C discharge is 100. A rectangular battery can was used for evaluation. A layered battery was used as each secondary battery. Further, capacity performance of the secondary batteries in a potential range between 2 and 4.6 V was also compared for evaluation. In addition, the ratio of the capacity at 1 C discharge to that at 10 C discharge was measured in each secondary battery.

### (Nail penetration test)

The state of heat generation and the outer appearance were observed when an iron wire nail with a diameter of 2.7 mm penetrated each secondary battery, which was charged fully, at a speed of 5 mm/sec. in a normal temperature environment. The nail penetration test is a substitute for short-circuit evaluation in a secondary battery.

### (Overcharge test)

The electric current at a charge rate of 200 % was maintained. Then, variation in outer appearance was observed for over 15 minutes.

### (Life characteristic at normal temperature)

Evaluation of the life characteristic at normal temperature was performed on each secondary battery in a potential range of 2-4.3V. After each secondary battery was charged at a temperature of 25°C at 1C/4.3 V, the secondary battery was subjected to 3000 cycles of 1C/2V discharge. Then, a reduction in capacity relative to the initial capacity was measured for comparison.

### (Evaluation results)

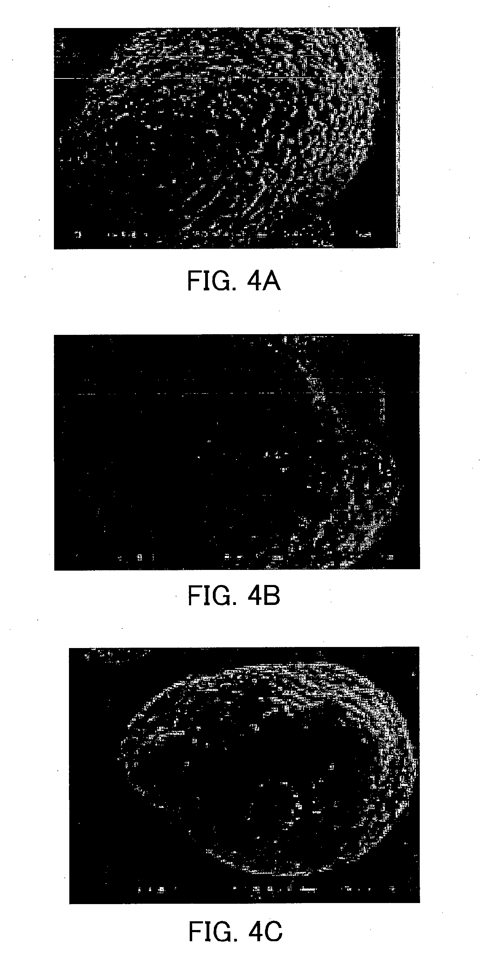

FIGS. 4A-4C are SEM photographs showing the structure in cross section of the positive electrode in Example 1. As shown in FIGS. 4A-4C, the positive electrode in Example 1 includes particles (core particles) of the active material with a diameter of 1 µm or larger and the nano particles with a major axis (length of long axis) of 100 nm to 300 nm agglomerated on the surface of the active material. The major axis of the dominant nano particles on the surfaces of the core particles was in the range between 100 nm and 300 nm (except abnormal value). A considerable number of nano particles had a major axis of 100 nm to 300 nm on average.

The particles (core particles) of the active material of the positive electrode in Example 1 were composed of any one of LiNi(Sb)O₂, Li₂MnO₃, and LiMnPO₄. Further, the nano particles on the surface of the active material were dominantly composed of a eutectic substance of LiNi(Sb)O₂ and Li₂MnO₃.

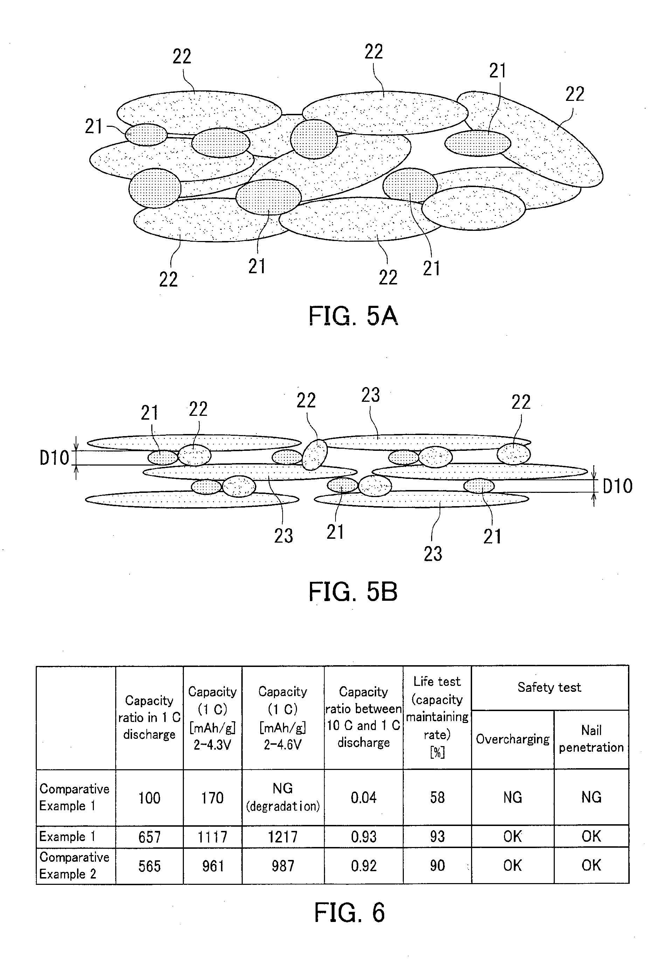

FIGS. 5A and 5B are illustrations schematically showing the structure in cross section of the negative electrode in Example 1, which was observed by EEELS and TEM.

As shown in FIG. 5A, it was confirmed that the negative electrode in Example 1 included the first particles 21 made of lithium (Li) metal functioning as a donor and the second particles 22 made of silicon oxide. The first particles 21 (lithium metal) wew formed on the surfaces of the second particles 22 (silicon oxide). Some of the first particles 21 covered the second particles 22, while others of the first particles 21 were dotted on the surfaces of the second particles 22. TEM observation found that the probability that the first particles 21 (lithium metal) were formed on the surfaces of the second particles 22 (silicon oxide) in lithium octylate (organic lithium) was 80-100 %. It is noted that according to a charge/discharge state, the transmitted ions (e.g., lithium ions) may be present additionally on the surfaces of the second particles 22 (silicon oxide).

Further, as shown in FIG. 5B, it was confirmed that the negative electrode in Example 1 further included the layered material 23 made of graphene. The first particles 21 and the second particles 22 were formed among the layers of the layered material 23 in such a fashion they were in contact with each other (see FIG. 5A). The first particles 21 and the second particles 22 were held by the layered material 23. The possibility that the first particles 21 (lithium metal) and the second particles 22 (silicon oxide) were formed among the layers of the layered material 23 (graphene) was 60-99 %. It is noted that according to a charge/discharge state, the transmitted ions (e.g., lithium ions) may be present additionally among the layers of the layered material 23. Further, in the case where no mechanofusion is performed in manufacturing the negative electrode in Example 1, the first particles (lithium metal) and the second particles (silicon oxide) in contact with each other do not enter among the layers of the layered material (graphene) but peep from the layers of the layered material.

No nano particles were agglomerated on the surface of the active material of the positive electrode in Comparative Example 1. Further, no metal particles (lithium metal, etc.) were formed on the surface of silicon oxide in the negative electrode in Comparative Example 1.

Similarly to in Comparative Example 1, no metal particles (lithium metal) were formed on the surface of silicon oxide in the negative electrode in Comparative Example 2.

FIG. 6 shows results of the initial capacity evaluation, nail penetration test, overcharge test, and evaluation of life characteristics at normal temperature. In the overcharge test, each secondary battery, in which no abnormality was caused, is indicated as "OK", and each secondary battery, in which any abnormality (swelling, breakage, etc.) was caused, is indicated as "NG". In the nail penetration test, each secondary battery, in which no change in temperature and outer appearance was caused, is indicated as "OK", and each secondary battery, in which any change in temperature or outer appearance was caused, is indicated as "NG".

Overheating after one second from the nail penetration was significant in the battery in Comparative Example 1 regardless of the nail penetration speed. By contrast, overheating after nail penetration was suppressed to a great degree in the battery in Example 1. Each battery after the nail penetration test was decomposed and checked to find that the separator was melted in a wide range in the battery in Comparative Example 1. By contrast, the original shape of the ceramic containing nonwoven fabric was maintained in the battery in Example 1. It can be considered from this fact that overheating to a great degree could be prevented because the structure of the ceramic containing nonwoven fabric was not broken, and expansion of part of the short-circuit could be reduced even in heat generation by a short-circuit caused after nail penetration.

Overheating by nail penetration in the battery in Comparative Example 1 may be explained as follows according to past experimental results.

Contact between the positive and negative electrodes (short-circuit), for example, can generate Joule heat. By this heat, a material having low thermal resistivity (separator) can be melted to form a stiff short circuit part. This may lead to continuous generation of the Joule heat to overheat the positive electrode. As a result, the positive electrode can reach a thermally unstable region (over 160°C). For this reason, lithium ion batteries as in Comparative Example 1 require various treatment in order to fully ensure its safety. By contrast, hybrid batteries as in Example 1 can ensure their safety easily. Further, Example 1 require electrolyte only to the amount to apply to the surface of a ceramic layer (hole transmission member 40). Therefore, the flammability is lowered more than that in Comparative Example 1.

Accordingly, overheating might have been caused in the overcharge test by the same mechanism as above.

The binding agent will be examined next. The battery in Comparative Example 1, which uses PVDF as the positive electrode binding agent, could not suppress overheating when the nail penetrating speed was reduced. The secondary battery in Comparative Example 1 was disassembled and examined to find that the active material fell off from the aluminum foil (current collector). The reason of this might be as follows.

When the nail penetrated the battery in Comparative Example 1 to cause an internal short-circuit, the short-circuit might have generated Joule heat to melt PVDF (crystalline melting point of 174°C), thereby deforming the positive electrode. When the active material fell off, the resistance might have been reduced to cause the electric current to further easily flow. This might have accelerated overheating to deform the positive electrode.

Even in the case using CMC or styrene butadiene rubber (SBR) instead of PVDF, overheating might be caused by the same mechanism as above. For example, in the case using CMC, which has a kick-off temperature of 245°C, burning down of CMC might lose the adhesiveness of the negative electrode of the lithium battery.

By contrast, in the battery in Example 1, as shown in FIG. 6, deformation by overheating was reduced in both the nail penetration test and the overcharge test.

As the binding agent for the electrodes, a substance that is hardly burnt down and melted is desirable. For example, it is preferable to use at least one type of which crystalline melting point and kick-off temperature are 250°C or higher. Specifically, the binding agent for the electrodes is preferably composed of amorphous rubber macromolecules having high thermal resistance (320°C) and having a polyacrylonitrile unit. Further, rubber macromolecules have rubber elasticity and can be easily bent. Therefore, the rubber macromolecules are effective in batteries of winding type. Furthermore, a binding agent with a nitrile group exemplified by a polyacrylonitrile group prevents holes from moving a little in semiconductor and is therefore excellent in electrical characteristics.

A porous ceramic layer (hole transmission member 40), which corresponds to a hole transport layer, is provided between a p-type semiconductor layer (electrode 10) and a n-type semiconductor layer (electrode 20) in Example 1. The ceramic layer is bonded to the n-type semiconductor layer. By immersing each electrode and the ceramic layer in the electrolyte, a hybrid battery having the characteristics of both a lithium battery and a semiconductor battery can be formed.

The battery in Example 1 can exhibit both quick input/output as a feature of a semiconductor battery and high capacity as a feature of a lithium battery. In the battery in Comparative Example 1, movement of electrical charge (ion movement) in charge/discharge is insufficient because of rate limiting in a dissociation reaction, which serves as inhibitor of ion movement, or resistance generated when a composite of an organic substance and ions moves. By contrast, both hole movement and ion movement contribute to charge/discharge in the battery in Example 1. Accordingly, cations of graphene and silicon oxide could be received much more. This might have resulted in that the battery in Example 1 could attain high capacity, which is seven times that of the battery in Comparative Example 1.

Moreover, it could be confirmed that the battery in Example 1 had high input/output performance as a feature of a semiconductor battery. As shown in FIG. 6, the battery in Example 1 had more excellent performance than the battery in Comparative Example 1 in capacity ratio of 10 C/1 C (discharge capacity ratio).

Still further, as shown in FIG. 6, the battery in Example 1 has a capacity larger than that in Comparative Example 2.

The present invention is not limited to the above embodiments. For example, the following modifications are possible in reduction in practice.

The ion transmission member 30 is formed in the vias 30a in the hole transmission member 40 in the above embodiment. However, the present invention is not limited to this. The ion transmission member 30 may be arranged apart from the hole transmission member 40.

The ions and holes are transmitted through the ion transmission member 30 and the hole transmission member 40 in both charge and discharge in the above embodiment. However, the present invention is not limited to this, and only one of the ions and the holes may be transmitted in charge or discharge. For example, only the holes may be transmitted through the hole transmission member 40 in discharge. Alternatively, only the transmitted ions may be transmitted through the ion transmission member 30 in charge.

Only one member may have both the functions of ion transmission and hole transmission. Further, the hole transmission member 40 may be formed integrally with the ion transmission member 30.

The secondary battery according to the present invention is not limited to hybrid batteries. For example, when the negative electrode of a lithium battery includes the first particles made of metal and the second particles made of a silicon containing substance in contact with the first particles, the capacity of the battery can be increased.

The secondary battery and the electrode for a secondary battery according to the present invention can attain high output and high capacity and are therefore suitably applicable to large-size storage batteries. For example, the secondary battery and the electrode for a secondary battery according to the present invention are suitably employable as a storage battery in an electric power generating mechanism of which output is unstable, such as geothermal power generation, wind power generation, solar power generation, water power generation, and wave power generation. Further, the secondary battery and the electrode for a secondary battery according to the present invention can be suitably employed in mobile entities, such as electric vehicles.

## Claims

1. A secondary battery, comprising a positive electrode and a negative electrode,
wherein the negative electrode includes:
first particles made of metal; and
second particles made of a silicon containing substance, and the first particles are in contact with the second particles.

2. The secondary battery of claim 1, wherein
the metal forming the first particles is ionized to move to the positive electrode in charge or discharge.

3. The secondary battery of claim 1, wherein
the metal forming the first particles functions as a donor.

4. The secondary battery of any one of claims 1-3, wherein
the first particles are made of lithium.

5. The secondary battery of any one of claims 1-4, wherein
the second particles are made of silicon oxide.

6. The secondary battery of any one of claims 1-5, wherein
the negative electrode further includes a layered material, and
the first particles and the second particles are located among layers of the layered material.

7. The secondary battery of claim 6, wherein
the layered material is made of graphene.

8. The secondary battery of claim 6 or 7 wherein
the layered material has an interlayer distance of 10 nm to 500 nm.

9. The secondary battery of any one of claims 1-8, wherein
the positive electrode includes:
core particles with a diameter of 1 µm or larger; and
particles with a diameter of smaller than 1 µm formed on surfaces of the core particles.

10. The secondary battery of any one of claims 1-9, further comprising:
an ion transmission member configured to transmit ions between the negative electrode and the positive electrode; and
a hole transmission member configured to transmit holes (positive holes) between the negative electrode and the positive electrode.

11. The secondary battery of claim 10, wherein
the ion transmission member is maintained in a state of any of liquid, gel, and solid.

12. The secondary battery of claim 10 or 11, wherein
the hole transmission member is composed of nonwoven cloth carrying a ceramic material.

13. An electrode for a secondary battery, comprising:
first particles made of metal; and
second particles made of a silicon containing substance,
wherein the first particles are in contact with the second particles.
